# EUROPÄISCHE PATENTSCHRIFT

(11) **EP 3 580 462 B1**
(45) Veröffentlichungstag und Bekanntmachung des Hinweises auf die Patenterteilung: **22.12.2021**
(21) Anmeldenummer: 18703478.0
(22) Anmeldetag: 01.02.2018
(51) Int. Cl.: F04D 25/06, F04D 29/28, G01P 3/488

(54) **LÜFTERANORDNUNG MIT LÜFTER UND ZAHNRING UND UMRICHTERMOTOR MIT LÜFTERANORDNUNG**
FAN ARRANGEMENT WITH FAN AND TOOTHED RING AND CONVERTER MOTOR WITH FAN ARRANGEMENT
ENSEMBLE DE VENTILATEUR À VENTILATEUR ET BAGUE DENTÉE ET MOTEUR À CONVERTISSEUR COMPRENANT L'ENSEMBLE DE VENTILATEUR

(30) Priorität: 10.02.2017 DE 102017001264
(43) Veröffentlichungstag der Anmeldung: 18.12.2019
(73) Patentinhaber: SEW-EURODRIVE GmbH & Co. KG, 76646 Bruchsal (DE)
(72) Erfinder: SCHMIDT, Josef, 76676 Graben-Neudorf (DE); ALTAN, Firat, 76131 Karlsruhe (DE); ZÖLLER, Thomas, 76646 Bruchsal (DE); SCHÄFER, Jens, 76676 Graben-Neudorf (DE); SCHUMANN, Christian, 76774 Leimersheim (DE); HAUCK, Matthias, 68723 Schwetzingen (DE)
(86) Internationale Anmeldenummer: PCT/EP2018/025027
(87) Internationale Veröffentlichungsnummer: WO 2018/145818

(56) Entgegenhaltungen:
- DE-A1-102007 044 176
- JP-A- S62 237 097
- JP-A- 2014 190 309
- US-A1- 2008 101 966
- US-A1- 2009 027 853
- US-B1- 6 386 839

## Beschreibung

Die Erfindung betrifft eine Lüfteranordnung mit Lüfter und Zahnring und Umrichtermotor mit Lüfteranordnung.

Es ist allgemein bekannt, dass ein Lüfter mit einer Welle drehfest verbindbar ist.

**Aus der** US 2008/101966 A1 **ist als nächstliegender Stand der Technik eine Radiallüfteranordnung bekannt.**

**Aus der** JP S62 237097 A **ist ein Turbolüfter mit Winkelsensor bekannt.**

**Aus der** JP 2014 190309 A **ist ein Klimagerät bekannt.**

**Aus der** US 2009/027853 A1 **ist ein Lüfter bekannt.**

Der Erfindung liegt daher die Aufgabe zugrunde, eine Lüfteranordnung weiterzubilden, wobei eine kompakte Ausführung eines die Lüfteranordnung umfassenden Motors erreichbar sein soll.

Erfindungsgemäß wird die Aufgabe bei der Lüfteranordnung nach den in Anspruch 1 und bei dem Umrichtermotor nach den in Anspruch 15 angegebenen Merkmalen gelöst.

Von Vorteil ist dabei, dass ein Motor kompakt ausbildbar ist, weil am Lüfter ein metallischer Zahnring im Kunststoffmaterial des Lüfters vorsehbar ist. Somit ist der Lüfter mit zwei Funktionen, nämlich der Funktion der Förderung eines Luftstroms und mit der Funktion eines Gebers für einen Sensor zur Erfassung der Winkelstellung, versehen. Durch Umspritzen des Zahnrings ist eine sehr kompakte Ausführung des Lüfters erreichbar. Außerdem ist der ringförmige Bereich des Lüfters zur Aufnahme des Zahnrings geeignet und gleichzeitig zur Strömungsführung des vom Lüfter geförderten Luftstroms.

Der Sensor samt der zugehörigen Auswerteelektronik ist auf einer Leiterplatte vorsehbar, welche zu einer den Lüfter radial umgebenden Lüfterhaube hingedrückt wird. Somit ist auch eine Wärmeabfuhr der auf der Leiterplatte angeordneten Bauelemente über die Lüfterhaube zum vom Lüfter geförderten Luftstrom hin bewirkbar. Dabei ist die Lüfterhaube vorzugsweise aus einem metallischen Werkstoff gefertigt.

Insgesamt ist der Motor somit sehr kompakt ausführbar.

Erfindungsgemäß sind die von der Drehachse des Lüfters aus gesehenen, radial äußeren Endbereiche des Zahnrings nicht vom Material des Lüfters umgeben, wobei der Zahnring im Lüfter integriert angeordnet ist wobei der restliche Bereich des Zahnrings, also der gesamte Zahnring mit Ausnahme der radial äußeren Endbereiche, vom Material des Lüfters umgeben ist. Von Vorteil ist dabei, dass eine verbesserte Erkennung bei der Winkelstellungserfassung ermöglicht ist. Denn zwischen den Flussführungselementen des Sensors und dem Zahnring ist kein Material des Lüfters zwischengeordnet und somit eine fehlerarme Erkennung ausführbar.

Bei einer vorteilhaften Ausgestaltung erstrecken sich die Lüfterflügel, insbesondere von der Drehachse des Lüfters bezogen, in axialer und in radialer Richtung
und/oder die in Umfangsrichtung oder in jeweiliger tangentialer Richtung gemessene Wandstärke des jeweiligen Lüfterflügels, insbesondere jedes Lüfterflügels, ist konstant,
insbesondere wobei die tangentiale Richtung parallel zur durch den Schwerpunkt des jeweiligen Lüfterflügels gehenden tangentialen Richtung ausgerichtet ist. Von Vorteil ist dabei, dass die Lüfterflügel schmal ausgeführt sind und der geförderte Luftstrom in jeweiligen durch die Lüfterflügel begrenzten Kanäle führbar ist.

Bei einer vorteilhaften Ausgestaltung sind am Zahnring nach radial außen hervorstehende Zähne ausgeformt. Von Vorteil ist dabei, dass abhängig von der Zähnezahl eine entsprechend hohe Auflösung erzielbar ist.

Bei einer vorteilhaften Ausgestaltung ist der Zahnring aus Ferrit oder einem anderen ferromagnetischen Werkstoff, insbesondere Stahl, gefertigt. Von Vorteil ist dabei, dass eine einfache kostengünstige Herstellung ausführbar ist.

Bei einer vorteilhaften Ausgestaltung ist der Grundkörper ein Rotationskörper. Von Vorteil ist dabei, dass eine einfache Herstellung ermöglicht ist.

Bei einer vorteilhaften Ausgestaltung weist der Grundkörper einen konusförmigen Bereich auf, welcher nach radial innen in einen hohlzylindrischen Bereich des Grundkörpers übergeht. Von Vorteil ist dabei, dass der hohlzylindrische Bereich zur kraftschlüssigen Verbindung mit einer Welle vorgesehen ist und der konusförmige Bereich zur Luftführung geeignet ausgeführt ist.

Bei einer vorteilhaften Ausgestaltung strömt der vom Lüfter geförderte Luftstrom zwischen jeweils zwei zueinander nächstbenachbarten Lüfterflügeln zwischen dem ringförmigen Bereich und dem Grundkörper durch. Von Vorteil ist dabei, dass eine effektive Luftführung ermöglicht ist.

Bei einer vorteilhaften Ausgestaltung ist der vom ringförmigen Bereich überdeckte axiale Bereich von dem von den Lüfterflügeln überdeckten axialen Bereich umfasst. Von Vorteil ist dabei, dass der ringförmige Bereich an die Lüfterflügel angeformt ist und die Luftführung sozusagen eine teilweise Luftumlenkung um den ringförmigen Bereich herum ermöglicht.

Bei einer vorteilhaften Ausgestaltung ist der vom ringförmigen Bereich überdeckte axiale Bereich von dem von dem Grundkörper überdeckten axialen Bereich umfasst. Von Vorteil ist dabei, dass der hohlzylindrische Bereich des Grundkörpers mit dem ringförmigen Bereich axial überlappt und somit eine Luftführung zwischen dem ringförmigen Bereich und dem Grundkörper ausführbar ist.

Bei einer vorteilhaften Ausgestaltung ist der vom ringförmigen Bereich überdeckte Radialabstandsbereich innerhalb des von den Lüfterflügeln überdeckten Radialabstandbereich angeordnet. Von Vorteil ist dabei, dass die Luftführung teilweise um den ringförmigen Bereich herum ausführbar ist.

Bei einer vorteilhaften Ausgestaltung geht der ringförmige Bereich zum jeweiligen, insbesondere zu jedem, Lüfterflügel hin glatt, insbesondere gerundet, über. Von Vorteil ist dabei, dass eine möglichst laminare Luftführung ermöglicht ist

Bei einer vorteilhaften Ausgestaltung ist der Lüfter, insbesondere also der Grundkörper, die Lüfterflügel und der ringförmige Bereich, als Kunststoffspritzgussteil ausgeführt. Von Vorteil ist dabei, dass eine einfache Herstellung des Lüfters samt dem mit Ausnahme seiner radialen Endbereiche, insbesondere seiner Zähne, im Lüfter umspritzten Zahnring ermöglicht ist.

Wichtige Merkmale bei dem Umrichtermotor mit Lüfteranordnung sind, dass der Lüfter mit einer Rotorwelle des Elektromotors des Umrichtermotors drehfest verbunden ist, wobei ein Sensor zur Detektion des Zahnrings, insbesondere der radial nach außen hervorstehenden Zähne des Zahnrings, mit dem Statorgehäuse des Elektromotors lösbar, insbesondere drehfest, verbunden ist.

Von Vorteil ist dabei, dass der Umrichtermotor sehr kompakt ausführbar ist, da der Lüfter einerseits zur Förderung des Luftstroms und andererseits als Geber für einen Sensor fungiert. Dabei ist das Geberteil, also der metallische und/oder ferromagnetische Zahnring im Lüfter integriert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

In der Figur 1 ist eine Draufsicht auf eine erfindungsgemäße Lüfteranordnung dargestellt, welche einen Lüfter 1 mit integriertem Zahnring 2 und einen Sensor 3 aufweist.

In der Figur 2 ist eine Schrägansicht auf den Lüfter dargestellt, wobei der Zahnring separiert ist.

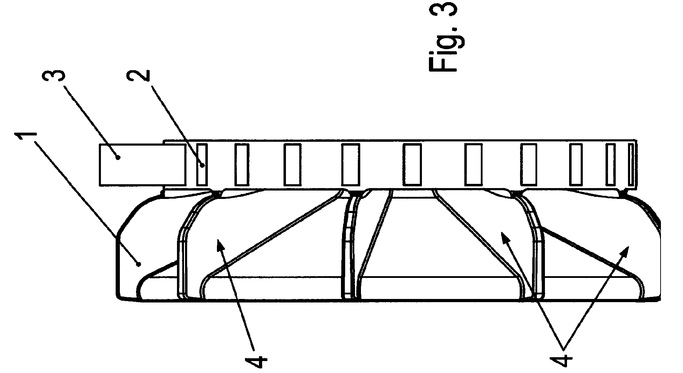

In der Figur 3 ist eine Seitenansicht der Lüfteranordnung gezeigt.

Wie in den Figuren dargestellt, weist die Lüfteranordnung einen Lüfter 1 auf, an welchem Lüfterflügel 4 ausgeformt sind.

Der Lüfter 1 ist drehfest mit einer in den Figuren nicht gezeigten Welle verbindbar. Dabei ist er mittig auf die Welle aufgesteckt.

Der Lüfter 1 weist auch einen Grundkörper auf, welcher einen konusförmigen Bereich 5 aufweist und einen hohlzylindrischen Bereich 6 aufweist, welcher ein mittig angeordnetes Rundloch aufweist zum Durchführen der Welle. Der Grundkörper ist ein Rotationskörper. Radial außerhalb eines ersten Radialabstandes ist er also konusförmig geformt und radial innerhalb des ersten Radialabstandswertes hohlzylindrisch. Der Übergang von der Konusform 5 zur Hohlzylinderform 6 ist gerundet ausgeführt, so dass also dieser Rundungsbereich im Bereich des ersten Radialabstands angeordnet ist.

Die Lüfterflügel 4 sind am Grundkörper 5 angeformt.

Die Lüfterflügel 4 sind in Umfangsrichtung zur Drehachse, also Wellenachse, regelmäßig voneinander beabstandet. Die Lüfterflügel 4 sind blattförmig, insbesondere eben, ausgeführt und erstrecken sich also in radialer und axialer Richtung. Die in Umfangsrichtung gemessene Wandstärke ist konstant.

Auf der vom Grundkörper gegenüberliegenden Seite der Lüfterflügel ist am Lüfter ein ringförmiger Bereich 7 ausgeformt, in welchem der Zahnring 2 angeordnet ist. Dabei bedeckt zwar das Material des Lüfters den Zahnring 2, allerdings nicht die radialen Endbereiche der nach radial außen gerichteten Zähne des Zahnrings 2. Somit ist der Abstand zu den stationär angeordneten Flussführungselementen des Sensors 3 möglichst klein.

Der vom ringförmigen Bereich 7 überdeckte Radialabstandbereich ist von dem von den Lüfterflügeln 4 überdeckten Radialabstandsbereich umfasst.

Der vom ringförmigen Bereich 7 überdeckte axiale Bereich ist von dem von den Lüfterflügeln 4 überdeckten axialen Bereich umfasst.

Der ringförmige Bereich 7 ist in Umfangsrichtung umlaufend ununterbrochen ausgeführt.

Der vom ringförmigen Bereich 7 überdeckte Radialabstandbereich erstreckt sich von einem zweiten Radialabstand zu einem dritten Radialabstand, wobei der dritte Radialabstand größer ist als der zweite Radialabstand, der größer ist als der erste Radialabstand.

Somit ist zwischen jeweils zwei in Umfangsrichtung nächstbenachbarten Lüfterflügeln 4 ein Raumbereich für den vom Lüfter geförderten Luftstrom vorgesehen, wobei der Luftstrom in axialer Richtung im Radialabstandsbereich zwischen dem ersten und dem zweiten Radialabstand eintritt und in radialer Richtung austritt radial außerhalb des dritten Radialabstands. Somit strömt der vom Lüfter geförderte Luftstrom jeweils axial zwischen ringförmigem Bereich 7 und Grundkörper 5 durch.

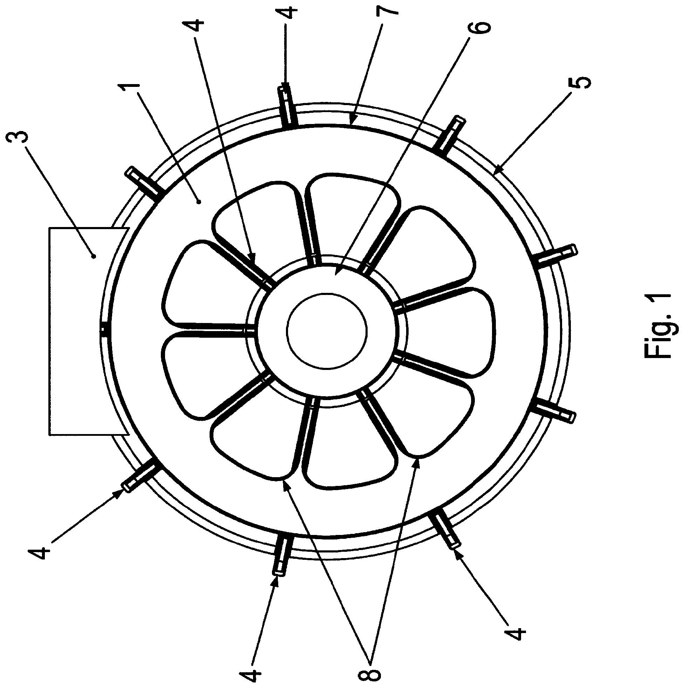

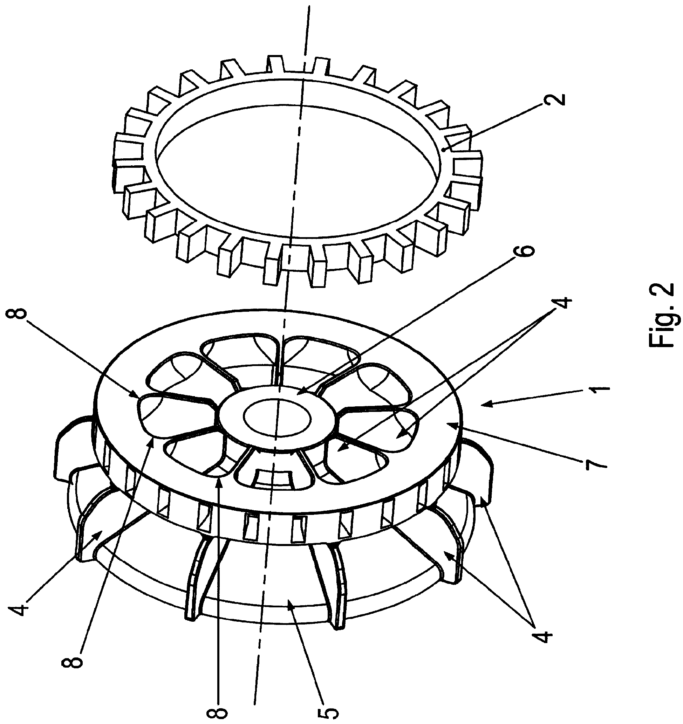

**Der Übergangsbereich von den Lüfterflügeln 4 zum ringförmigen Bereich 7 ist jeweils gerundet ausgeführt. In** **Figur 1** **und** **Figur 2** **ist für diesen jeweiligen Rundungsbereich das Bezugszeichen 8 verwendet. Dabei erstreckt sich der Rundungsbereich 8 in axialer Richtung über die gesamte axiale Breite des ringförmigen Bereichs 7. Dabei ist ein solcher gerundeter Übergangsbereich vom Lüfterflügel 4 aus in Umfangsrichtung ausgeführt und ein weiterer solcher gerundeter Übergangsbereich vom Lüfterflügel aus entgegen der Umfangsrichtung.**

**Der Rundungsradius an einer axialen Position h sei mit r(h) bezeichnet.**

**Der Rundungsradius r(h) nimmt mit abnehmender Entfernung, insbesondere axialer Entfernung, zum Grundkörper monoton, insbesondere streng monoton, ab. Die Rundungsradien r(h) nehmen also in der jeweiligen axialen Ebene zum Grundkörper hin immer mehr ab, bis der Rundungsradius r(h) Null ist, also den axial niedrigsten Wert des ringförmigen Bereichs 7 erreicht.**

**Die Abnahme des Rundungsradius r(h) bis zu dessen Verschwinden ist vorzugsweise eine lineare Funktion der axialen Position. Somit ist eine einfache Herstellung ermöglicht und eine laminare Strömung des geförderten Luftstroms bewirkbar.**

**Der Mittelpunkt des jeweiligen Rundungsradius r(h) eines ersten, dem jeweiligen Lüfterflügel 4 zugeordneten Rundungsbereichs weist eine mit der axialen Position, insbesondere mit der axialen Entfernung zum Grundkörper hin, monoton, insbesondere streng monoton, ansteigenden Radialabstandswert und/oder einen ansteigenden Umfangswinkelwert auf.**

**Der Mittelpunkt des jeweiligen Rundungsradius r(h) des anderen, dem jeweiligen Lüfterflügel 4 zugeordneten Rundungsbereichs weist eine mit der axialen Position, insbesondere mit der axialen Entfernung zum Grundkörper hin, monoton, insbesondere streng monoton, ansteigenden Radialabstandswert und/oder einen abfallenden Umfangswinkelwert auf.**

**Vorzugsweise ist die genannte Abhängigkeit des jeweiligen Radialabstandswerts und des Umfangswinkelwertbetrags eine lineare Funktion der axialen Position. Somit ist eine einfache Herstellung ermöglicht und eine laminare Strömung des geförderten Luftstroms bewirkbar. Dabei ist die lineare Funktion derart gewählt, dass bei Verschwinden des Rundungsradius r(h) der zugehörige Mittelpunkt den ringförmigen Bereich berührt.**

**Bei weiteren erfindungsgemäßen Ausführungsbeispielen ist auch eine polynomiale Abhängigkeit, insbesondere mit einem Polynom zweiter Ordnung, von der axialen Position vorteilhaft, um einen noch weiter verbessert laminaren Luftstrom zu bewirken. Dies gilt sowohl für den Radialabstand und/oder Umfangswinkelwertbetrag des Mittelpunktes sowie auch für des Rundungsradius r(h).**

Der Lüfter 1 ist als Gussteil herstellbar, insbesondere aus Kunststoff, insbesondere mittels Spritzgussverfahren. Vor dem Gießvorgang wird der metallische Zahnring 2 in die Gießform eingelegt und somit der Zahnring 2 umgeben vom Material, insbesondere Kunststoff, des Lüfters. Nur am radial äußeren Randbereich bleibt der Zahnring 2 unbedeckt, so dass zwischen Sensor samt dessen Flussführungslement und diesen äußeren Randbereichen kein Material des Lüfters vorhanden ist. Auf diese Weise ist ein sehr schmaler Luftspalt zwischen Zahnring 2 und Flussführungselement des Sensors 3 erreichbar.

### Bezugszeichenliste

- 1: Lüfter
- 2: Zahnring
- 3: Sensor mit Flussführungselementen
- 4: Lüfterflügel
- 5: Grundkörper mit konusförmigem und hohlzylindrischem Bereich
- 6: hohlzylindrischer Bereich
- 7: ringförmiger Bereich
- 8: Rundungsbereich

## Patentansprüche

1. Lüfteranordnung mit Lüfter und Zahnring,
**wobei** der Lüfter einen Grundkörper aufweist, an welchem Lüfterflügel angeformt sind, wobei der Lüfter einen ringförmigen Bereich aufweist,
**wobei der Zahnring innerhalb des ringförmigen Bereichs angeordnet ist,**
**dadurch gekennzeichnet, dass Zahnrin über die Lüfterflügel vom Grundkörper beabstandet ist,**
wobei **der ringförmige Bereich** an der vom Grundkörper abgewandten Seite der Lüfterflügel angeformt ist,
**wobei die von der Drehachse des Lüfters aus gesehenen, radial äußeren Endbereiche des Zahnrings nicht vom Material des Lüfters umgeben sind,**
**wobei der Zahnring im Lüfter integriert angeordnet ist,**
**wobei der restliche Bereich des Zahnrings, also der gesamte Zahnring mit Ausnahme der radial äußeren Endbereiche, vom Material des Lüfters umgeben** ist,
**wobei der vom Lüfter geförderte Luftstrom zwischen jeweils zwei zueinander nächstbenachbarten Lüfterflügeln zwischen dem ringförmigen Bereich und dem Grundkörper durchströmt.**

2. Lüfteranordnung nach Anspruch 1,
**dadurch gekennzeichnet, dass**
die Lüfterflügel, insbesondere von der Drehachse des Lüfters bezogen, in axialer und in radialer Richtung sich erstrecken.

3. Lüfteranordnung nach mindestens einem der vorangegangenen Ansprüche,
**dadurch gekennzeichnet, dass**
die in Umfangsrichtung oder in jeweiliger tangentialer Richtung gemessene Wandstärke des jeweiligen Lüfterflügels, insbesondere jedes Lüfterflügels, konstant ist,
insbesondere wobei die tangentiale Richtung parallel zur durch den Schwerpunkt des jeweiligen Lüfterflügels gehenden tangentialen Richtung ausgerichtet ist.

4. Lüfteranordnung nach mindestens einem der vorangegangenen Ansprüche,
**dadurch gekennzeichnet, dass**
am Zahnring nach radial außen hervorstehende Zähne ausgeformt sind,
und/oder dass
der Zahnring samt den Zähnen vom Material des ringförmigen Bereichs so umgeben sind, dass nur die radialen Außenflächen der Zähne nicht vom Material des ringförmigen Bereichs abgedeckt sind.

5. Lüfteranordnung nach mindestens einem der vorangegangenen Ansprüche,
**dadurch gekennzeichnet, dass**
der Zahnring aus Ferrit oder einem anderen ferromagnetischen Werkstoff, insbesondere Stahl, gefertigt ist.

6. Lüfteranordnung nach mindestens einem der vorangegangenen Ansprüche,
**dadurch gekennzeichnet, dass**
der Grundkörper ein Rotationskörper ist.

7. Lüfteranordnung nach mindestens einem der vorangegangenen Ansprüche,
**dadurch gekennzeichnet, dass**
der Grundkörper einen konusförmigen Bereich aufweist, welcher nach radial innen in einen hohlzylindrischen Bereich des Grundkörpers übergeht.

8. Lüfteranordnung nach mindestens einem der vorangegangenen Ansprüche,
**dadurch gekennzeichnet, dass**
der vom ringförmigen Bereich überdeckte axiale Bereich von dem von den Lüfterflügeln überdeckten axialen Bereich umfasst ist.

9. Lüfteranordnung nach mindestens einem der vorangegangenen Ansprüche,
**dadurch gekennzeichnet, dass**
der vom Zahnring überdeckte axiale Bereich von dem von den Lüfterflügeln überdeckten axialen Bereich umfasst ist.

10. Lüfteranordnung nach mindestens einem der vorangegangenen Ansprüche,
**dadurch gekennzeichnet, dass**
der vom ringförmigen Bereich überdeckte axiale Bereich von dem von dem Grundkörper überdeckten axialen Bereich umfasst ist.

11. Lüfteranordnung nach mindestens einem der vorangegangenen Ansprüche,
**dadurch gekennzeichnet, dass**
der vom ringförmigen Bereich überdeckte Radialabstandsbereich innerhalb des von den Lüfterflügeln überdeckten Radialabstandbereich angeordnet ist.

12. Lüfteranordnung nach mindestens einem der vorangegangenen Ansprüche,
**dadurch gekennzeichnet, dass**
der ringförmige Bereich zum jeweiligen, insbesondere zu jedem, Lüfterflügel hin glatt, insbesondere gerundet, übergeht.

13. Lüfteranordnung nach mindestens einem der vorangegangenen Ansprüche,
**dadurch gekennzeichnet, dass**
der Lüfter, insbesondere also der Grundkörper, die Lüfterflügel und der ringförmige Bereich, als Kunststoffspritzgussteil ausgeführt ist.

14. Lüfteranordnung nach mindestens einem der vorangegangenen Ansprüche,
**dadurch gekennzeichnet, dass**
der Lüfter einen Rundungsbereich als Übergang zwischen Lüfterflügel und ringförmigem Bereich aufweist,
wobei der Rundungsbereich derart geformt ist, dass der Rundungsradius r(h) in einer axialen Ebene in axialer Richtung, also mit abnehmender Entfernung zum Grundkörper, monoton, insbesondere streng monoton, insbesondere linear oder gemäß einer Polynomial-Funktion, abnimmt,
wobei der Radialabstandswert und Umfangswinkelwert des jeweiligen Mittelpunkts des zum jeweiligen Rundungsradius r(h) zugehörigen Kreises in axialer Richtung zunimmt.

15. Umrichtermotor mit Lüfteranordnung nach mindestens einem der vorangegangenen Ansprüche,
**dadurch gekennzeichnet, dass**
der Lüfter mit einer Rotorwelle des Elektromotors des Umrichtermotors drehfest verbunden ist
wobei ein Sensor zur Detektion des Zahnrings, insbesondere der radial nach außen hervorstehenden Zähne des Zahnrings, mit dem Statorgehäuse des Elektromotors lösbar, insbesondere drehfest, verbunden ist.

## Claims

1. A fan arrangement having a fan and toothed ring,
wherein the fan has a basic body on which there are formed fan blades,
wherein the fan has an annular region,
wherein the toothed ring is arranged within the annular region,
**characterised in that**
the toothed ring is spaced apart from the basic body via the fan blades,
wherein the annular region is formed at the fan-blade side remote from the basic body,
wherein the radially outer end regions, viewed from the rotational axis of the fan, of the toothed ring are not surrounded by the material of the fan,
wherein the toothed ring is arranged in the fan in an integrated manner,
wherein the remaining region of the toothed ring, therefore the entire toothed ring with the exception of the radially outer end regions, is surrounded by the material of the fan, wherein the air flow conveyed by the fan flows through between the annular region and the basic body, between in each case two next-adjacent fan blades.

2. A fan arrangement according to claim 1,
**characterised in that**
the fan blades extend in an axial and in a radial direction, in particular related to the rotational axis of the fan.

3. A fan arrangement according to at least one of the preceding claims,
**characterised in that**
the wall thickness, measured in a circumferential direction or in a respective tangential direction, of the respective fan blade, in particular of each fan blade, is constant,
in particular wherein the tangential direction is oriented parallel to the tangential direction passing through the centre of gravity of the respective fan blade.

4. A fan arrangement according to at least one of the preceding claims,
**characterised in that**
radially outwards projecting teeth are formed on the toothed ring,
and/or **in that**
the toothed ring together with the teeth is surrounded by the material of the annular region in such a manner that only the radial outer surfaces of the teeth are not covered by the material of the annular region.

5. A fan arrangement according to at least one of the preceding claims,
**characterised in that**
the toothed ring is manufactured from ferrite or another ferromagnetic material, in particular steel.

6. A fan arrangement according to at least one of the preceding claims,
**characterised in that**
the basic body is a body of revolution.

7. A fan arrangement according to at least one of the preceding claims,
**characterised in that**
the basic body has a cone-shaped region which turns into a hollow-cylindrical region of the basic body in a radially inwards direction.

8. A fan arrangement according to at least one of the preceding claims,
**characterised in that**
the axial region covered by the annular region is encompassed by the axial region covered by the fan blades.

9. A fan arrangement according to at least one of the preceding claims,
**characterised in that**
the axial region covered by the toothed ring is encompassed by the axial region covered by the fan blades.

10. A fan arrangement according to at least one of the preceding claims,
**characterised in that**
the axial region covered by the annular region is encompassed by the axial region covered by the basic body.

11. A fan arrangement according to at least one of the preceding claims,
**characterised in that**
the radial distance range covered by the annular region is arranged within the radial distance range covered by the fan blades.

12. A fan arrangement according to at least one of the preceding claims,
**characterised in that**
the annular region turns into the respective fan blade, in particular into each fan blade, in a smooth manner, in particular a rounded manner.

13. A fan arrangement according to at least one of the preceding claims,
**characterised in that**
the fan, in particular therefore the basic body, the fan blades and the annular region, is in the form of a plastics injection-moulded part.

14. A fan arrangement according to at least one of the preceding claims,
**characterised in that**
the fan has a rounded region as a transition between fan blade and annular region, wherein the rounded region is formed in such a manner that the curvature radius r(h) in an axial plane decreases in an axial direction, therefore as the distance from the basic body decreases, in a monotonic manner, in particular in a strictly monotonic manner, in particularly linearly or according to a polynomial function,
wherein the radial distance value and circumferential angle value of the respective midpoint of the circle associated with the respective curvature radius r(h) increases in an axial direction.

15. A converter motor having a fan arrangement according to at least one of the preceding claims,
**characterised in that**
the fan is connected to a rotor shaft of the electric motor of the converter motor in a rotationally-fixed manner,
wherein a sensor for the detection of the toothed ring, in particular of the radially outwards projecting teeth of the toothed ring, is connected to the stator housing of the electric motor in a detachable, in particular rotationally-fixed, manner.

## Revendications

1. Ensemble de ventilation comprenant un ventilateur et une couronne dentée, le ventilateur étant muni d'un corps de base avec lequel des ailettes de ventilation sont façonnées d'un seul tenant,
ledit ventilateur comportant une région annulaire,
ladite couronne dentée étant logée à l'intérieur de ladite région annulaire,
**caractérisé par le fait que**
la couronne dentée est espacée du corps de base par l'intermédiaire des ailettes de ventilation,
la région annulaire étant ménagée solidairement du côté des ailettes de ventilation qui pointe à l'opposé dudit corps de base,
sachant que les zones d'extrémité de la couronne dentée, situées radialement à l'extérieur en considérant à partir de l'axe de rotation du ventilateur, ne sont pas entourées par le matériau dudit ventilateur,
la couronne dentée occupant un emplacement intégré dans ledit ventilateur,
la zone restante de la couronne dentée, c'est-à-dire l'intégralité de ladite couronne dentée à l'exception des zones d'extrémité radialement extérieures, étant entourée par ledit matériau du ventilateur,
sachant que le courant d'air refoulé par le ventilateur circule entre la région annulaire et le corps de base, à chaque fois entre deux ailettes de ventilation les plus voisines l'une de l'autre.

2. Ensemble de ventilation selon la revendication 1,
**caractérisé par le fait que**
les ailettes de ventilation s'étendent dans les directions axiale et radiale, notamment par rapport à l'axe de rotation du ventilateur.

3. Ensemble de ventilation selon au moins l'une des revendications précédentes,
**caractérisé par le fait que**
l'épaisseur de paroi de l'ailette de ventilation considérée, en particulier de chaque ailette de ventilation, est constante mesurée dans la direction périphérique ou dans une direction tangentielle respective,
sachant, en particulier, que ladite direction tangentielle est orientée parallèlement à la direction tangentielle passant par le centre de gravité de ladite ailette de ventilation considérée.

4. Ensemble de ventilation selon au moins l'une des revendications précédentes,
**caractérisé par le fait que**
des dents radialement en saillie vers l'extérieur font corps avec la couronne dentée ;
et/ou **par le fait que**
ladite couronne dentée et lesdites dents sont associativement entourées, par le matériau de la région annulaire, d'une manière telle que seules les surfaces extérieures radiales desdites dents ne sont pas recouvertes par le matériau de ladite région annulaire.

5. Ensemble de ventilation selon au moins l'une des revendications précédentes,
**caractérisé par le fait que**
la couronne dentée est fabriquée en ferrite ou en un autre matériau ferromagnétique, notamment en acier.

6. Ensemble de ventilation selon au moins l'une des revendications précédentes,
**caractérisé par le fait que**
le corps de base est un corps de révolution.

7. Ensemble de ventilation selon au moins l'une des revendications précédentes,
**caractérisé par le fait que**
le corps de base comporte une région tronconique fusionnant radialement, vers l'intérieur, dans une région cylindrique creuse dudit corps de base.

8. Ensemble de ventilation selon au moins l'une des revendications précédentes,
**caractérisé par le fait que**
la région axiale, couverte par la région annulaire, est englobée par la région axiale couverte par les ailettes de ventilation.

9. Ensemble de ventilation selon au moins l'une des revendications précédentes,
**caractérisé par le fait que**
la région axiale, couverte par la couronne dentée, est englobée par la région axiale couverte par les ailettes de ventilation.

10. Ensemble de ventilation selon au moins l'une des revendications précédentes,
**caractérisé par le fait que**
la région axiale, couverte par la région annulaire, est englobée par la région axiale couverte par le corps de base.

11. Ensemble de ventilation selon au moins l'une des revendications précédentes,
**caractérisé par le fait que**
la zone d'espacement radial, couverte par la région annulaire, est située à l'intérieur de la zone d'espacement radial couverte par les ailettes de ventilation.

12. Ensemble de ventilation selon au moins l'une des revendications précédentes,
**caractérisé par le fait que**
la région annulaire fusionne en douceur, notamment avec arrondi, vers l'ailette de ventilation considérée et notamment vers chaque ailette de ventilation.

13. Ensemble de ventilation selon au moins l'une des revendications précédentes,
**caractérisé par le fait que**
le ventilateur, c'est-à-dire notamment le corps de base, les ailettes de ventilation et la région annulaire, sont réalisés en tant que pièce en matière plastique moulée par injection.

14. Ensemble de ventilation selon au moins l'une des revendications précédentes,
**caractérisé par le fait que**
le ventilateur est pourvu d'une région arrondie marquant la transition entre une ailette de ventilation et la région annulaire,
laquelle région arrondie est configurée de façon telle que le rayon r(h) de l'arrondi décroisse dans un plan axial et dans la direction axiale, c'est-à-dire au fur et à mesure de la décroissance de l'éloignement vis-à-vis du corps de base, de manière monotone, en particulier strictement monotone, notamment linéaire ou selon une fonction polynomiale, la valeur de l'espacement radial, et la valeur de l'angle périphérique du centre respectif de la circonférence associée au rayon considéré r(h) de l'arrondi, présentant un accroissement dans la direction axiale.

15. Moteur à inverseur, équipé d'un ensemble de ventilation conforme à au moins l'une des revendications précédentes,
**caractérisé par le fait que**
le ventilateur est relié, avec verrouillage rotatif, à un arbre rotorique du moteur électrique dudit moteur à inverseur,
sachant qu'un capteur affecté à la détection de la couronne dentée, en particulier des dents de ladite couronne dentée qui font saillie radialement vers l'extérieur, est relié au carter statorique dudit moteur électrique avec faculté de dissociation, notamment avec verrouillage rotatif.
